# DEMANDE DE BREVET EUROPEEN

(11) **EP 1 493 942 A1**
(43) Date de publication de la demande: **05.01.2005**
(21) Numéro de dépôt: 04291598.3
(22) Date de dépôt: 24.06.2004
(51) Int. Cl.: F16F 15/02, F41A 27/30

(54) **Dispositif d'amortissement actif d'une arme par accord de la transmission**

(30) Priorité: 02.07.2003 FR 0308043
(71) Demandeur: GIAT INDUSTRIES, 78000 Versailles (FR)
(72) Inventeur: Urvoy, Emile, Roussigny 91470 Limours (FR)
(74) Mandataire: Célanie, Christian

(57) **Abrégé**

La présente invention concerne un dispositif d'amortissement actif des oscillations d'une arme 27 à faible consommation énergétique, comprenant un tube 1 de fréquence de résonance mis en rotation autour d'un axe site ou gisement 3' par rapport à une tourelle 4 ou un bâti, par un moto-réducteur 2' comprenant un moteur 8' et une transmission 9', ledit moto-réducteur 2' appliquant sur le tube 1 un couple déterminé par une loi de commande 7', ledit dispositif étant caractérisé en ce que la fréquence de résonance de l'inertie du moteur 8' sur l'élasticité de la transmission 9' soit proche de la fréquence de résonance du tube 1.

## Description

Le secteur technique de la présente invention est celui des asservissements, et plus particulièrement, celui de l'amortissement actif des modes de déformation d'une structure.

Une application est envisagée et plus particulièrement décrite pour le pointage d'une arme et l'amortissement de cette arme, notamment dans le cadre du tir en marche.

On s'intéresse aux systèmes d'armes, principalement de type canon, montés sur un moyen d'orientation de type tourelle, de type affût ou pod. Ces systèmes d'arme peuvent fonctionner en coup par coup ou en tir par rafale «armes automatiques» et, le cas échéant, être montés sur un véhicule pouvant se déplacer.

Ces systèmes sont très sensibles à toute excitation dynamique, que celle-ci provienne du tir en cadence ou qu'elle soit occasionnée par les accélérations induites par les mouvements du véhicule porteur, lors par exemple du roulage en terrain varié. Les premiers modes d'excitation se situent typiquement dans la plage de 10 à 30 Hz.

Un système, dont la raideur est pratiquement limitée et non infinie, peut être équipé d'un asservissement qui permet d'obtenir une orientation/pointage de l'arme peu sensible aux perturbations de roulage. Les perturbations dues au roulage apparaissent, pour leur aspect le plus important, sous la forme de perturbations en vitesse angulaire ou en accélération du support de l'arme. Lorsque l'on est en présence d'une arme équilibrée, c'est à dire d'une arme dont le centre de gravité est situé sur l'axe de rotation, ou proche de l'être, les perturbations dues au roulage nuisent assez peu à la qualité de l'orientation de l'arme. Mais, dans le cas le plus fréquent, l'arme ne peut pas dans la pratique être équilibrée.

Dans le cas d'une arme lourde, l'élasticité propre du tube fait apparaître une fréquence propre de son premier mode proche des fréquences de bouclage des asservissements. Il s'ensuit une résonance qui limite les possibilités et la qualité des asservissements et par voie de conséquence qui est à l'origine de la dégradation de la précision du tir de l'arme.

De plus, cette résonance peut induire des déformations dynamiques du tube de l'arme de plusieurs milliradians. Ainsi, lorsque ces modes de résonance sont excités, la précision du tir est encore dégradée.

Les systèmes d'armes sont actuellement spécifiés pour offrir une performance de tir en marche, ou encore tir en mouvement, de qualité voisine de celle du tir à l'arrêt.

Pour pallier les conséquences néfastes sur la précision du tir des effets de ces déformations dynamiques, plusieurs solutions sont connues. Une première catégorie d'approche consiste à observer la déformation et à choisir en conséquence l'instant précis du déclenchement du tir. Une seconde catégorie d'approche consiste à maîtriser la déformation dynamique afin de la réduire et donc d'en réduire l'incidence sur la précision du tir.

La première catégorie est connue sous le vocable de «fenêtre de tir». Un moyen permettant de mesurer ou d'estimer en temps réel la déformation dynamique de l'arme, sur les deux voies site et gisement, est utilisé. Les mesures de déformation instantanée sont utilisées pour optimiser l'instant de la mise de feu. Dans la pratique, ces systèmes permettent de diminuer le risque de mise de feu aux positions extrêmes des déformations. Cependant, l'amélioration obtenue est limitée et ne permet pas de s'approcher suffisamment du besoin.

Dans la seconde catégorie de solutions, on agit sur la déformation en tentant de la maîtriser, notamment en en diminuant l'amplitude, par «amortissement» de l'effet de résonance. Pour cela, plusieurs approches sont possibles. On peut distinguer les approches passives et les approches actives.

L'amortissement passif consiste, par exemple, à fixer sur le tube des résonateurs amortis constitués par des masselottes, positionnées sur les ventres de résonance et reliées radialement au tube par une liaison élastique et amortissante. Dans la pratique, cette approche est difficile à réaliser et à mettre au point. La présence des résonateurs et leur liaison au tube modifient très fortement le comportement naturel de l'arme au tir.

Une autre solution, nommée amortissement actif, consiste à utiliser une motorisation pour appliquer, à la fréquence de la résonance à amortir, sur l'arme ou sur la tourelle, un couple de réaction proportionnel et opposé à la vitesse de la déformation. Ceci vise à réduire l'énergie du mode concerné et provenant des perturbations induites par le tir en cadence ou par le roulage.

Pour réaliser une stabilisation permanente de l'arme par amortissement actif, il est connu d'utiliser une motorisation électrique. Ce principe de motorisation permet de n'avoir à fournir à une arme équilibrée que l'énergie nécessaire pour vaincre les frottements dans le système de pointage et d'orientation de l'arme.

L'amortissement actif consiste à commander dans la transmission, un couple de motorisation, fonction de la vitesse d'arcure de l'arme. Cette dernière vitesse peut être mesurée ou calculée.

Cette solution présente des limitations, en terme de consommation énergétique de la motorisation notamment, lorsqu'il est nécessaire d'agir sur des modes de déformation du tube de fréquence supérieure à la fréquence propre du moteur sur l'élasticité de la transmission. Un inconvénient majeur de tels systèmes est lié au fait que la sensibilité du courant alimentant le moteur de la motorisation, à partir des lois de commande mises en place pour amortir la résonance de l'arme, est relativement élevée dans un domaine fréquentiel étendu.

La présente invention remédie à ces différents inconvénients par un amortissement actif de la résonance du tube qui minimise la consommation énergétique de la motorisation.

L'invention a pour objet un dispositif d'amortissement actif des oscillations d'une structure, notamment d'une arme comprenant un tube présentant une fréquence de résonance à amortir, mis en rotation autour d'un axe site ou gisement par rapport à une tourelle par un moto-réducteur, comprenant un moteur et une transmission, ledit moto-réducteur appliquant un couple déterminé par une loi de commande, caractérisé en ce qu'il présente une fréquence de résonance de l'inertie du moteur sur l'élasticité de la transmission proche de la fréquence de résonance du tube.

Avantageusement, la transmission présente un jeu apparent, vu du tube, inférieur à un centième de milliradian.

Avantageusement, la loi de commande comprend une première boucle asservissant le moto-réducteur en couple.

Selon une autre caractéristique de l'invention, la loi de commande comprend une seconde boucle d'asservissement utilisant en entrée une vitesse d'arcure du tube mesurée par un capteur de vitesse d'arcure.

Selon une autre caractéristique alternative de l'invention, la loi de commande comprend une seconde boucle d'asservissement utilisant en entrée une vitesse d'arcure estimée par un modèle de comportement du tube en flexion.

Selon une autre caractéristique de l'invention, le modèle de comportement du tube en flexion comprend un gyromètre placé sur le masque de l'arme pour assurer le recalage du modèle d'estimation de la vitesse d'arcure.

Selon une autre caractéristique de l'invention, le dispositif comprend un moto-réducteur secondaire, distinct du moto-réducteur principal pour l'amortissement actif, pour orienter l'arme en site et gisement.

Un avantage du dispositif selon l'invention est de réduire en amplitude, ainsi qu'à un domaine fréquentiel entourant immédiatement la fréquence de résonance, la consommation énergétique de la motorisation.

Un autre avantage du dispositif selon l'invention est de permettre une atténuation de la résonance de l'arme quelle que soit l'origine de l'excitation : excitation par le tir en cadence, par le roulage ou par la motorisation elle-même.

D'autres caractéristiques, détails et avantages de l'invention ressortiront plus clairement de la description détaillée donnée ci-après à titre indicatif en relation avec des dessins sur lesquels :
- la figure 1 présente une vue de profil, d'une arme montée dans une tourelle,
- la figure 2 présente une vue de dessus, de cette même arme montée dans la tourelle,
- la figure 3 précise la définition de l'arcure,
- la figure 4 illustre la modélisation retenue pour le tube et le principe de la loi de commande utilisée pour amortir sa résonance,
- la figure 5 présente la courbe asymptotique du ratio entre le courant et le couple en fonction de la pulsation (fréquence),
- la figure 6 présente la même courbe dans le cas particulier d'un accord de la transmission.

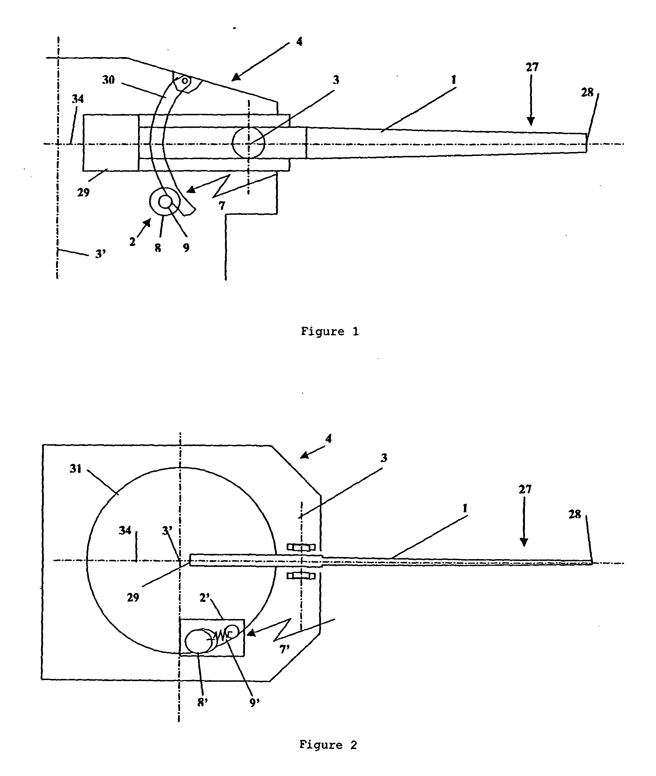

Selon la figure 1, une arme 27 présente un tube 1 libre à une extrémité 28 encore appelée bouche et solidaire de la tourelle 4 à l'autre extrémité 29 encore dénommée masque. Le tube 1 est mobile en rotation autour d'un axe de tourillonnement 3, horizontal et transversal à l'axe longitudinal de symétrie du tube, permettant l'orientation ou pointage en site de l'arme. Cet axe 3 de rotation est matérialisé par des tourillons 3 solidaires du tube 1 formant des portées cylindriques pouvant tourner par rapport à des paliers (non représentés) solidaires de la tourelle 4. Une motorisation 2, solidaire de l'arme et venant engrener sur un secteur denté 30 solidaire de la tourelle 4, permet la mise en mouvement et l'orientation du tube 1 en site autour de l'axe 3. De manière similaire, la motorisation 2 peut être solidaire de la tourelle 4 et venir engrener sur un secteur denté 30 solidaire de l'arme, ou encore être constitué d'un vérin dont une extrémité est solidaire de l'arme et l'autre extrémité est solidaire de la tourelle. Cette motorisation 2 est assurée par un moto-réducteur 2. Ce moto-réducteur peut comprendre un moteur électrique ou hydraulique, un vérin électrique ou hydraulique, un moteur couple ou tout autre dispositif moteur équivalent. Dans un mode de réalisation particulier, donné à titre illustratif, le moto-réducteur est constitué d'un moteur électrique tournant à une vitesse moyenne, de l'ordre de 400 tr/mn, couplé à un réducteur présentant un rapport de réduction compris entre 475 et 550 permettant d'adapter la puissance du moteur à la vitesse maximale de rotation de la charge (ici l'arme). Le moto-réducteur 2 comprend un moteur 8 et une transmission comprenant essentiellement un réducteur 9. Ce moto-réducteur 2 est asservi selon une loi de commande d'amortissement LC qui sera explicitée ci-après.

Le déplacement en gisement de l'arme et de son tube est assuré classiquement par la tourelle 4 elle-même qui est mobile par rapport à son bâti.

Il est à noter que chacun des deux axes site et gisement de cet ensemble tube/arme/tourelle est traité de façon similaire et quasiment indépendante. L'orientation de ces axes est donnée par la motorisation en site 2 ou en gisement 2'.

Sur la figure 2, qui représente une vue de dessus, est illustré le fonctionnement en gisement de l'arme. L'ensemble de la tourelle 4 portant l'arme est mobile en rotation autour d'un axe gisement 3' vertical. Les tourillons 3 ne présentant pas de degrés de liberté dans le plan horizontal, l'arme et le tube 1 sont entraînés en rotation avec la tourelle et les tourillons agissent en gisement comme un encastrement. Classiquement, une couronne dentée 31, centrée sur l'axe de rotation gisement 3' reçoit l'engrènement d'un pignon entraîné par la motorisation 2'. La couronne dentée 31 est solidaire de la tourelle 4 et la motorisation 2' du bâti, ou l'inverse. Le bâti désigne ici la caisse du véhicule porteur ou la structure de l'affût ou du pod. Ceci permet d'exercer, lorsque la motorisation 2' fonctionne, un couple entre le bâti et la tourelle 4 permettant la mise en rotation selon le gisement de ladite tourelle 4.

La motorisation 2' applique un couple d'amortissement en gisement. Ce moto-réducteur 2' est asservi selon une loi de commande d'amortissement 7'. Il comprend un moteur 8' et un réducteur 9'.

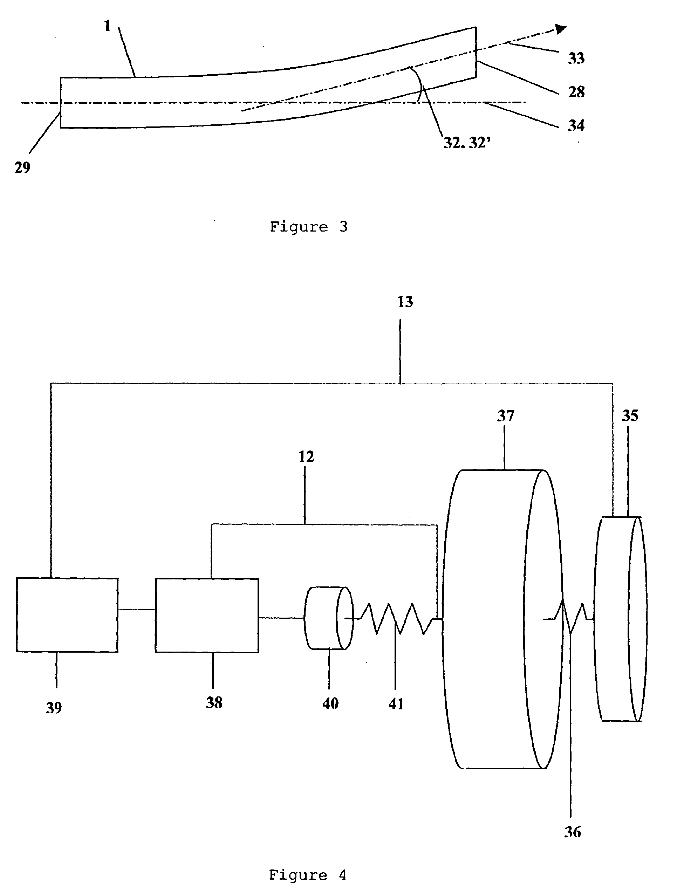

Le tube 1 est équivalent à une poutre flexible fixée par une de ses extrémités 29 à la tourelle 4. Sa déformation peut se caractériser par la mesure de l'arcure 32. L'arcure, comme indiqué sur la figure 3, est l'angle que fait l'axe 33 du tube 1 au niveau de la bouche 28 avec l'axe longitudinal 34 théorique neutre du tube 1 de l'arme. On peut utiliser soit l'arcure 32 soit la vitesse d'arcure 32' qui s'en déduit par dérivation par rapport au temps. Le tube 1 présente un certain nombre de fréquences de résonance de flexion du fait de son élasticité en flexion. La direction d'un tir résulte directement de l'orientation de l'axe 33 du tube 1 au niveau de la bouche 28 au moment du passage du projectile. Pour maintenir un niveau de qualité de la précision du tir, il est nécessaire de maîtriser ou du moins de connaître la flexion du tube 1.

La première fréquence (la plus basse) de résonance 10 ou premier mode de résonance 10 peut se situer à une fréquence relativement basse. Pour une arme lourde, l'élasticité du tube fait apparaître un premier mode à une fréquence de l'ordre de 20 Hertz, proche des fréquences de bouclage des asservissements. La résonance qui s'en suit limite les possibilités et la qualité des asservissements de stabilisation et par suite dégrade la précision de l'arme et du tir. Il convient, pour une bonne performance, de réduire au minimum, les effets de cette résonance.

Cette fréquence de résonance 10 présente une sensibilité élevée aux accélérations radiales. On désigne par radiales les directions orthogonales à l'axe 34 de l'arme ou axe longitudinal. Ces accélérations radiales sont principalement causées par les déplacements du véhicule supportant la tourelle 4 et notamment son pilonnement. Ce premier mode de flexion 10 est également sensible aux couples de la motorisation 2,2' qui assure l'orientation de l'arme dans l'espace et son amortissement ou encore aux couples et efforts induits par le tir automatique en cadence.

Afin de réduire les effets négatifs de la résonance, un principe d'amortissement de la résonance 10 du tube 1, réalisé par une motorisation, est retenu (amortissement actif).

Par principe élémentaire connu aussi bien des mécaniciens que des automaticiens, on sait qu'un système mécanique constitué par une masse fixée sur un ressort (respectivement une inertie sur une raideur angulaire), est amorti par une force appliquée sur la masse (respectivement un couple sur l'inertie), proportionnelle à la vitesse linéaire de la masse (respectivement la vitesse angulaire de l'inertie).

Lorsqu'on s'intéresse au système résonant constitué par le tube d'une arme assimilée à une poutre flexible, ancrée dans le bloc inertiel de la culasse, le modèle équivalent le plus simple correspond à deux masses inertielles reliées par un ressort. Le moyen théorique le plus simple et le plus naturel pour amortir ce type de système consiste à créer un effet amortisseur placé entre les deux masses. En pratique, une solution peut correspondre à un effort radial, passif ou commandé, exercé dans la zone du ventre du mode flexible à amortir en prenant appui sur un manchon. Ce manchon peut être une masse inerte ou un ancrage sur le berceau de l'arme, prenant appui sur l'arme au niveau du noeud secondaire avant de l'arme. Un tel effort, fonction de la vitesse relative entre le ventre et le manchon, aurait l'effet amortissant désiré. Cependant, l'appui nécessaire est difficilement réalisable ou sa réalisation trop contraignante sur l'architecture de l'arme.

Amortir la résonance de l'arme par un couple appliqué directement sur la partie arrière de l'arme est également possible.

Le principe d'amortissement correspond à rappeler le principe suivant:
- on dispose d'un système mécanique oscillant non amorti ou faiblement amorti,
- amortir ce système, ou limiter l'amplitude de résonance naturelle consiste à lui appliquer artificiellement un couple, en phase avec sa vitesse d'oscillation, proportionnel à cette vitesse et de sens opposé. Plus le coefficient de proportionnalité sera élevé, plus l'amplitude de la résonance diminuera.

La figure 4 présente, un schéma illustrant le modèle inertiel équivalent de l'arme et de la tourelle 4 que l'on désire amortir, ainsi que le principe de commande d'amortissement mis en oeuvre. En gisement, l'arme est représentée par une inertie équivalente 35, reliée à la tourelle 4 représentée par une inertie équivalente 37, par une raideur 36 représentative de l'élasticité en flexion du tube 1. La motorisation d'amortissement 2' entraîne l'inertie 37 de la tourelle 4.

Pour le site la modélisation est similaire en adaptant l'inertie 37 à la partie arrière rigide de l'arme, soit le bloc inertiel de la culasse de l'arme et son masque 29 et la raideur 36 pour qu'elle soit représentative de l'élasticité en flexion du tube 1 appuyé libre.

Le principe de motorisation et d'asservissement est identique pour les deux axes site et gisement. Un moteur site 8 ou gisement 8', d'inertie 40, entraîne en rotation la charge inertielle (tourelle et arme ou arme seule) au travers d'une transmission site 9 ou gisement 9', de raideur 41.

Une première boucle 12 asservit le moteur 8 ou 8' en couple. Le dispositif d'asservissement 38 calcule la vitesse à commander au moteur 8 ou 8' en fonction de la vitesse en sortie de la transmission 9 ou 9' fournie par la mesure en fonction du couple de consigne issu du bloc asservissement de niveau supérieur 39.

Une seconde boucle d'asservissement 13 asservit le couple à appliquer au tube en fonction de la vitesse d'arcure 32' mesurée au niveau de la bouche 28. Le bloc asservissement 39 détermine le couple d'amortissement en fonction de la déformation du tube 1 en flexion connue par la vitesse d'arcure 32'.

Pour obtenir une commande en couple de bonne qualité, mais surtout ne présentant pas de risque d'instabilité locale, il est préférable de disposer d'un réducteur sans jeu apparent entre le moteur et la charge. Dans la pratique, on acceptera un réducteur tel que le jeu apparent sur la totalité de la transmission, incluant donc ledit réducteur, vu du tube, reste inférieur à un centième de milliradian.

La boucle d'asservissement 13 détermine le couple d'amortissement à fournir en entrée de consigne de la boucle d'asservissement en couple 12. Ce couple est déterminé proportionnel à une grandeur indicative de la déformation. Pour cela, on utilise une information représentative de la déformation en flexion du tube de l'arme : l'arcure 32 ou sa dérivée, la vitesse d'arcure 32'. Cette donnée caractéristique peut être soit directement mesurée sur le tube de l'arme en temps réel, soit être obtenue par un «observateur» élaboré en utilisant le modèle de calcul 21 du tube de l'arme et de son comportement à la flexion lorsqu'il est sollicité.

Afin d'assurer la convergence de ce modèle de comportement 21 permettant d'estimer la vitesse d'arcure 32', on utilise une mesure fournie par un gyromètre 25 situé au niveau du masque 29.

Tout en admettant que le principe d'amortissement ne permet pas de supprimer totalement la résonance (ce qui n'est pas le but), l'intérêt véritable est bien de limiter la sensibilité du courant aux vibrations de roulage, à un domaine fréquentiel entourant immédiatement la fréquence de résonance, une atténuation forte apparaissant de part et d'autre de cette fréquence.

La véritable limitation imposée par ce type de système vient surtout du fait que les commandes en couple demandées à la motorisation doivent se matérialiser par une contrainte mécanique dans le réducteur, cette contrainte ne pouvant être réalisée que par rotation du moteur électrique et mise en torsion de la chaîne de réduction.

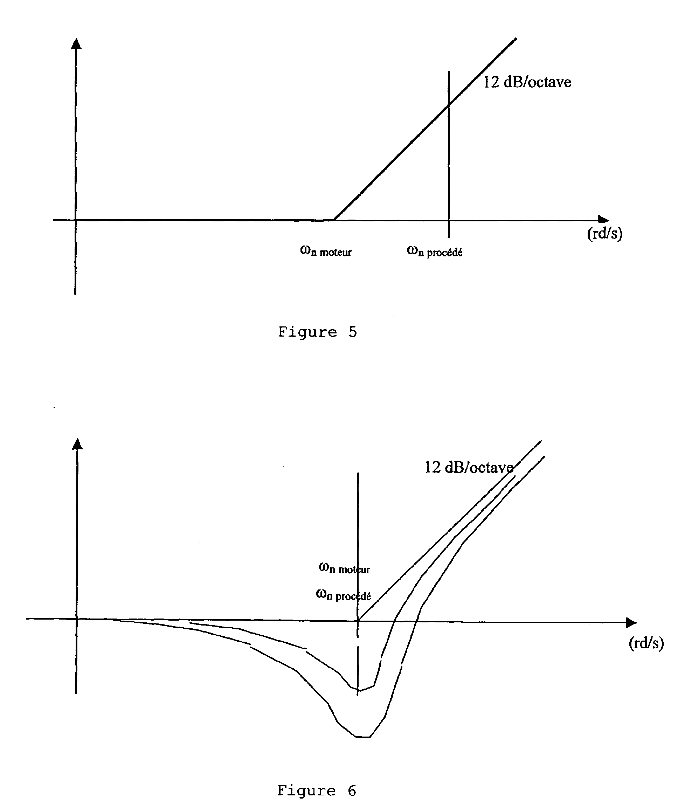

La figure 5 présente en coordonnées logarithmiques, la grandeur rapport (ou ratio) entre l'intensité de courant envoyée à un moteur électrique et le couple mécanique qu'il peut fournir en fonction de la fréquence (Hz) ou de la pulsation (rd/s). Cette courbe est représentée par convention habituelle à l'homme de l'art, symbolisée par ses asymptotes. Cette courbe fait nettement apparaître un seuil correspondant à la fréquence propre ω_{n moteur} de la motorisation. En dessous de ce seuil ω_{n moteur}, le ratio est constant, le couple est donc proportionnel au courant. Au-dessus de ce seuil, le ratio augmente selon une pente de 12 dB/octave. Le ratio augmente donc comme le carré de la fréquence. Le courant nécessaire à l'obtention d'un couple mécanique donné est proportionnel à ce couple multiplié par le carré de la fréquence. La fréquence propre ω_{n procédé} indicative du procédé considéré, ici le tube d'arme, est de l'ordre de 20 Hz. Dans la pratique, il faudrait pour s'affranchir de ce phénomène, réaliser une motorisation dont la fréquence propre ω_{n moteur} de l'inertie du moteur sur l'élasticité de la transmission serait supérieure au triple de celle ω_{n procédé} du procédé. Ceci est difficile à réaliser en pratique. On constate encore à l'analyse de la courbe que le coût énergétique de la commande d'un couple donné est d'autant plus important que la valeur de la fréquence propre du procédé ω_{n procédé} s'éloigne de la valeur de la fréquence propre ω_{n moteur} de la motorisation.

La figure 6 illustre dans le même système de coordonnées, l'effet sur ce même ratio entre le courant et le couple mécanique du calage de la fréquence propre de la motorisation ωₙ moteur sur la fréquence propre du procédé ω_{n procédé}. Ce calage encore appelé «accord», consiste à modifier les paramètres d'inertie du moteur et/ou de raideur de sa transmission en les choisissant tels que la fréquence propre ω_{n moteur} de l'inertie du moteur sur la raideur de la transmission, soit proche de la fréquence propre ω_{n procédé} du procédé considéré, en l'occurrence ici la fréquence propre 10 de premier mode du tube de l'arme 1. Cette courbe, ici réellement représentée, fait nettement apparaître un minimum du ratio au niveau de la fréquence propre de résonance du tube 1 de l'arme 27. Ce minimum apparaît dans la zone d'intérêt, puisque c'est autour de cette fréquence propre que l'on cherche principalement à amortir la résonance 10 du tube 1. Ce minimum peut faire apparaître un ratio inférieur dans un rapport N de l'ordre de quatre, au ratio nominal à l'origine. On en déduit l'intérêt d'un tel calage de la transmission sur le coût énergétique de la commande en amortissement, puisque l'on peut obtenir, dans la zone d'intérêt, un même couple d'amortissement pour un courant N fois moindre. Ceci montre tout l'intérêt qu'il peut y avoir à accorder la transmission sur la fréquence propre 10 du tube 1.

## Revendications

1. Dispositif d'amortissement actif des oscillations d'une structure, notamment d'une arme (27) comprenant un tube (1) présentant une fréquence de résonance (10) à amortir, mis en rotation autour d'un axe site (3) ou gisement (3') par rapport à une tourelle (4), par un moto-réducteur (2, 2'), comprenant un moteur (8,8') et une transmission (9, 9'), ledit moto-réducteur (2, 2') appliquant un couple déterminé par une loi de commande (7, 7'), **caractérisé en ce qu'**il présente une fréquence de résonance (11) de l'inertie du moteur (8, 8') sur l'élasticité de la transmission (9, 9') proche de la fréquence de résonance (10) du tube (1).

2. Dispositif d'amortissement selon la revendication 1, **caractérisé en ce que** la transmission (9, 9') présente un jeu apparent, vu du tube (1) inférieur à un centième de milliradian.

3. Dispositif d'amortissement selon la revendication 1 ou 2, **caractérisé en ce que** la loi de commande (7, 7') comprend une première boucle (12) asservissant le moto-réducteur (2, 2') en couple.

4. Dispositif d'amortissement selon la revendications 3, **caractérisé en ce que** la loi de commande (7,7') comprend une seconde boucle (13) d'asservissement utilisant en entrée une vitesse d'arcure (32') du tube (1) mesurée par un capteur de vitesse d'arcure (20).

5. Dispositif d'amortissement selon la revendication 3, **caractérisé en ce que** la loi de commande (7, 7') comprend une seconde boucle d'asservissement (13) utilisant en entrée une vitesse d'arcure (32') estimée par un modèle de comportement (21) du tube (1) en flexion.

6. Dispositif d'amortissement selon la revendication 5, **caractérisé en ce que** le modèle de comportement (21) du tube en flexion estimant la vitesse d'arcure (32') comprend un gyromètre de masque (25) pour assurer le recalage du modèle d'estimation de la vitesse d'arcure.
